Europäisches Patentamt

European Patent Office

Office européen des brevets

(11) Publication number: **0 318 228 B1**

# EUROPEAN PATENT SPECIFICATION

(45) Date of publication of patent specification: **01.07.92**

(51) Int. Cl.5: **C22C 1/09**, B29C 67/12, G11B 5/10

(21) Application number: **88310996.9**

(22) Date of filing: **21.11.88**

(54) **Composite material and filler therefor.**

(30) Priority: **21.11.87 JP 293100/87**
**01.11.88 JP 274595/88**

(43) Date of publication of application:
**31.05.89 Bulletin 89/22**

(45) Publication of the grant of the patent:
**01.07.92 Bulletin 92/27**

(84) Designated Contracting States:
**AT BE CH DE ES FR GB GR IT LI LU NL SE**

(56) References cited:
**WO-A-84/02306**
**CH-A- 653 288**

**PATENT ABSTRACTS OF JAPAN, vol. 8, no. 3
(C-203), 7th January 1984; & JP-A 58 171 422
(MATSUSHITA DENKI SANGYO K.K.)
08-10-1983**

**PATENT ABSTRACTS OF JAPAN, vol. 10, no.
43 (C-329), 20th February 1988; & JP-A-60 192
733 (MITSUBISHI RAYON K.K.) 01-10-1985**

**PATENT ABSTRACTS OF JAPAN, vol. 12, no.
128 (C-489), 20th April 1988; & JP-A 62 246**

**953 (ASAHI GLASS CO.) 28-10-1987**

**PATENT ABSTRACTS OF JAPAN, vol. 7, no.
135 (C-170), 11th June 1983; & JP-A-58 048
648 (TOYOTA JIDOSHA KOGYO K.K.)
22-03-1983**

(73) Proprietor: **Inabata Techno Loop Corporation
No. 203,22-11, Nishiazabu 2-Chome Minato-
ku
Tokyo(JP)**

(72) Inventor: **Inabata, Tadao
No. 502, 1-8, Shibuya 3-chome
Shibuya-ku Tokyo(JP)**

(74) Representative: **Deans, Michael John Percy et
al
Lloyd Wise, Tregear & CO. Norman House
105-109 Strand
London WC2R OAE(GB)**

# Description

The present invention relates to composite materials and to a filler material adapted to be filled therein.

Recently, a number of light materials and light composite materials have been developed, which have improved material characteristics. However, it is still difficult to make materials of these kinds lighter in weight and at the same time higher in strength because of incompatibility between these factors, by the use of convention arts of selecting a specific combination of metallic constituents each having a considerably large density. Conventional composite materials such as ones containing carbon fibres are also insufficient in this respect. The present inventor proposed a light metallic composite material comprised of a matrix of a light metallic material and microspheres mixed in the matrix, as disclosed in Japanese Patent Application No. 9830/1986 Japanese Provisional Patent Publication No. (170440.1987). However, we have found that it may be difficult to disperse additives whose density differ from that of the matrix (the microspheres, for instance) uniformly in the matrix.

Electrical component parts such as a head arm for supporting a magnetic head of a disk device, and a printer head for a printer have been made of damping materials, so as to improve performance of a device in which the electrical component part is mounted. For instance, a light head arm having a good damping ability made of a high-porosity damping material is known. However, it has been difficult to make structural materials for such electrical component parts with a desired vibration amplitude-frequency characteristic.

In accordance with a first aspect of the present invention, we provide a composite material comprising: a matrix and a filler composited therewith, the filter being characterised in having at least one mat consisting of fibres and fine granular additive dispersed on and affixed to said at least one mat, said fibres and said additive having heat-resistance sufficient to withstand heating temperatures at which they are respectively composited with said matrix, said additive having a density different from that of said matrix.

According to a second and alternative aspect of this invention, we provide a filler material adapted to be filled into a matrix and composited therewith at a high temperature to form a composite material, the filler material being characterised in comprising: at least one mat consisting of fibres; and fine granular additive dispersed on and affixed to said at least one mat; said fibres and said additives having heat-resistance sufficient to withstand heating to the temperature at which they may be respectively composited with said matrix; and said additive having a density different from that of said matrix.

We provide, in a third alternative aspect of this invention, a composite structural material having a damping function, characterised in comprising: a matrix; and a filler material which comprises at least one mat consisting of fibres, and fine granular additive dispersed on and affixed to said at least one mat; said fibres and said additive having heat-resistance sufficient to withstand heating temperatures at which they are respectively composited with said matrix to form said material; the relative proportion of additive in said material being selected so as to provide said structural material with a desired vibration amplitude-frequency characteristic.

The invention also extends to head arms for supporting magnetic heads of disk devices and made of such structural materials.

As will appear from the detailed description below practical examples of our composite material are light in weight and high in mechanical strength and have other improved characteristics such as high damping ability.

The invention is hereinafter more particularly described by way of example only with reference to the accompanying drawings, in which:-

Fig. 1 is a fragmentary schematic sectional view of an embodiment of composite material according to the present invention;

Fig. 2 is a schematic diagram showing a process of producing a filler material which forms part of the composite material of Fig. 1;

Fig. 3 is a schematic perspective view showing a head positioning mechanism of a disk device on which is mounted a head arm made of a structural material according to the present invention; and

Fig. 4 is a view showing, by way of example, a vibration amplitude-frequency characteristic of the structural material for the head arm.

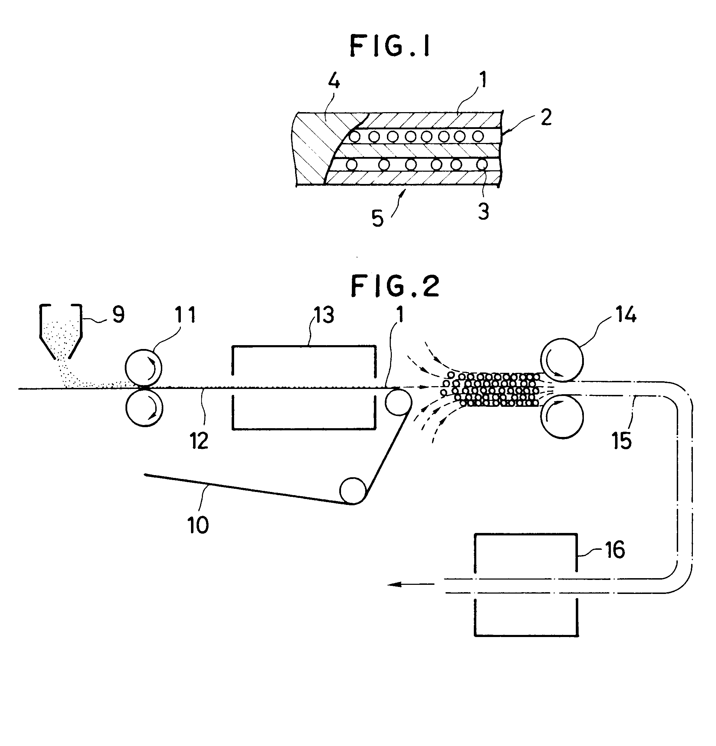

In Fig. 1, the composite material comprises a matrix 4 and a filler material 5 filled in the matrix and composited therewith. The filler material 5 has a plurality of mats 1 and a plurality of layers 2 of fine granular additive (here in the form of microspheres 3) having a density different from that of the matrix, with the mats and the layers alternately stacked one with the other. The microspheres 3 are dispersed on the mats 1 and affixed thereto.

The material of the matrix 4 is selected from metals, preferably light metallic materials, such as aluminium, magnesium, zinc, copper, brass, bronze; metal alloys, preferably, light metal alloys such as aluminium alloys; and synthetic resins. In this embodiment, a matrix of aluminium is employed.

The microspheres 3 are prepared in substantially the same manner as conventional microspheres or microcellular fillers, which recently have been developed as filler to be mixed in plastics and high molecular weight compounds and are employed essentially for reinforcing materials of the kind having low mechanical strength and low melting point. For instance, the microspheres 3 may be prepared by a melting method wherein pressurised air is injected into a molten raw material so that the material is formed into fine particles each of which contains therein air bubbles, or by a sintering method wherein a volatile component of granular raw material is vapourized but contained within respective molten or softened granules during the sintering process. However, as distinct from conventional microspheres, the microspheres 3 are composed of one or more of heat-resistant glasses having a high melting point such as borosilicate glass, silica glass, silica-alumina glass, or silica-alumina-calcium glass; metals; and ceramic materials such as silica, alumina or zirconia, so that the microspheres 3 have a softening point and melting point higher than those of conventional microspheres, and chemical stability to constituents of the matrix 4 such as Al, Mg, and Si. Further, in order to harmonise various characteristics of the resultant composite material such as lightness, strength, and damping ability, the microspheres 3 are prepared so as to have a diameter less than 300 microns and are formed into hollow spheres filled with a gas such as air.

In the present embodiment, hollow silica-alumina microspheres are used, which are composed of 58-65 wt% silica, 28-38 wt% alumina and less than 4 wt% iron oxide. For instance, the microspheres have wall thickness 0.1 times their diameter, melting point of 1,200°C, bulk density of 408 Kg/m$^3$, pressure-resistance strength of 5,000 psi 344 MPa, and hardness of 5 Moh.

The mat 1 is composed of fibres, which are short in length and composed of one or more of: heat-resistant glasses having a high melting point; ceramic materials; and metallic materials. Preferably, short fibres such as carbon fibres, or aluminium fibres or whiskers are used. In this embodiment, alumina fibres composed of 72-95 % alumina and 5-28 % silica are employed for reinforcing purpose, and alumina fibres composed of 72 % alumina and 28 % silica are employed for heat-insulating purpose. Typically, these fibres have melting point of 1,600°C, true specific gravity of 3.0-3.5 g/cm$^3$ and fibre diameter of 3 microns.

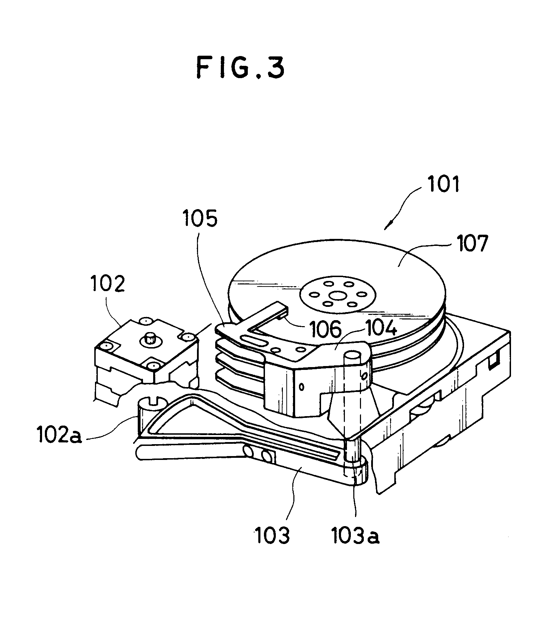

In manufacturing the filler material 5, as shown in Fig. 2, the above-mentioned short fibres are uniformly supplied from a hopper 9 on to a belt conveyer 10, and firmly affixed to each other by means of rollers 11 to be formed into a sheet. The thus obtained sheet 12 is passed through a sintering furnace 13 to thereby obtain the mat 1. Alternatively, the mat 1 may be obtained by forming long fibres composed of one of the above-mentioned constituents into a net. In this case the long fibre net is sintered, where required.

Next, the microspheres 3 are uniformly dispersed on one side surface of each of a required number of mats 1 prepared in the above-mentioned manner. Thereafter, these mats 1 are passed through rollers 14, with the mats 1 stacked on each other, so that the mats 1 are firmly affixed to each other to obtain a stacked body of the microspheres 3 and the mats 1, i.e., a composite mat 15. Further, the composite mat 15 is passed through a sintering furnace 16 so that the composite mat 15 is sintered, tempered, or softened to thereby firmly weld the respective microspheres 3 to associated mats 1. In this embodiment, the sintering temperature varies within a range of 900-1,000°C. Finally, the thus obtained composite mat 15 is cut into a required length by the use of a cutter (not shown) to obtain the filler material 5.

We should now explain one manufacturing method by which a composite material using the filler material can be obtained.

First, the filler material 5 is disposed within a moulding die (not shown). Then, a molten matrix 4 is poured into the die. To improve various characteristics of the composite material, the amount of molten matrix supplied is preferably such that the ratio of the molten matrix to the microspheres 3 lies between 10:1, by volume, which corresponds to a limit satisfying the requirement for lightness of the composite material, and 10:7 corresponding to a limit satisfying the requirement for strength of the same. When the molten matrix 4 is poured, the microspheres 3 are heated. These microspheres 3, which withstand the heating temperature and so are not destroyed, are positively composited with the matrix 4. further, since the microspheres 3 are affixed to the mats 1 beforehand in a uniform distribution, and, the mats 1, which also withstand the molten matrix temperature, positively hold the microspheres 3, the microspheres do not separate upon pouring of the molten matrix 4, and are distributed uniformly in the matrix 4, which has a different density from the microspheres 3. To enhance the composition process, the molten matrix and/or the die may be pressurised, or the die may be depressurised. A composite billet is obtained upon cooling. The billet may be heated and subjected to various forming processes such as rolling and extrusion, and heat treatments such as quenching and tempering, if desired, to obtain a final product or the composite material.

Although an individual microsphere 3 cannot itself withstand unidirectional external force and is thus liable to be broken, it becomes mechanically stabilized against external forces exerted along various directions when mixed in the matrix 4. Further, the gas filled in the interior of the microspheres 3 expands and contracts in volume with thermal expansion and contraction of the matrix 4, to provide the microspheres 3 with thermal stability. As a result, the microspheres 3 remain stabilized during the manufacturing process for the composite billet, in subsequent forming processes, and are hardly broken in the matrix 4. The resultant composite material is light in weight and high in strength and damping ability.

Fig. 3 shows a head positioning mechanism of a disk device, which is equipped with head arms comprised of a structural material according to the present invention. As in a conventional arrangement, the positioning mechanism 101 comprises a swing arm 104 disposed on a pivot shaft 103a of a swingable actuator arm 103 which is coupled to a capstan 102a of a stepping motor 102. A magnetic head 106 is fixed to the distal end of a head arm 105 mounted on the swing arm 104. A magnetic disk is shown at 107.

The head arm 105 is comprised of a structural material obtained by filling a filler material corresponding to the filler material 5 of Fig. 1 in a matrix corresponding to the matrix 4 of Fig. 1, and thus the structural material for the head arm 105 corresponds to the composite material of Fig. 1. Therefore, explanations as to the matrix and the filler material which form the structural material will be omitted here.

The head arm 105 is produced in substantially the same manner as that (partly shown in Fig. 2) of the composite material of Fig. 1.

Firstly, short fibres are affixed to each other to form a sheet, which is then sintered to obtain a mat corresponding to the mat of Fig. 1. Then the required number of mats on which microspheres are first dispersed are affixed to each other to obtain a stacked body of the microspheres and the mats. The resultant composite mat is sintered and is then cut into the required length to obtain a filler material corresponding to the filler material 5 of Fig. 1. Next, a molten matrix is poured into a die in which the filler material is disposed. In order to improve various characteristics of the head arm 105, in particular, to adjust the vibration amplitude-frequency characteristics of the head arm, the volume ratio of the supplied molten matrix to the microspheres is selected to a predetermined value.

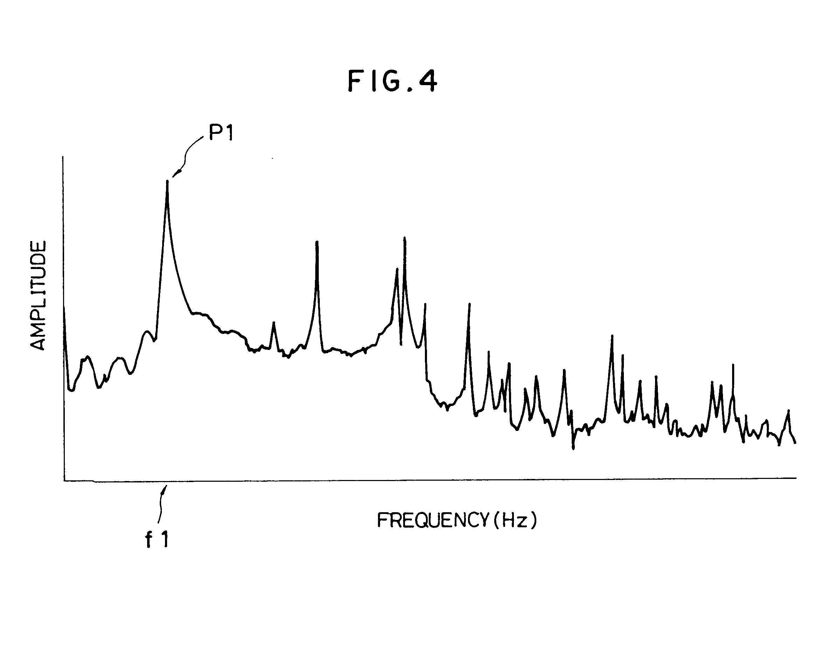

Then, as mentioned above with reference to Fig. 2, the resultant composite billet is subjected to various forming processes and heat treatments, and is further subjected to shape-forming processes such as cutting and punching to obtain the head arm 105 as final product. The resultant head arm 105 is light in weight and high in strength, and has a good damping ability. The vibration amplitude-frequency characteristic of the head arm 105 can be changed, together with density, Young's modulus, mechanical strength thereof, depending on the amount of the microspheres and physical properties of the microspheres such as diameter. More specifically, it is possible to reduce the magnitude of peaks (one of which is shown at P1 in Fig. 4) of vibration amplitude and cause the frequencies (one of which is shown by f1 in Fig. 4) at which the peaks appear (the frequencies of vibration of normal mode) to be inconsistent with a frequency of vibration generated by the stepping motor 102 and harmonic frequencies thereof. As a result, when the disk device is operated, vibration propagated from the motor 102 through actuator arm 103, etc., to the head arm 105 is greatly damped down in the head arm 105.

The present invention is not limited to the above mentioned embodiments, and various modifications may be made.

For instance, although hollow microspheres are employed in the above embodiments, solid microspheres may be employed. Similar advantages can be attained. Namely, the resultant composite material may have reduced weight due to density difference between the matrix and the microspheres and is provided with damping function due to a rigidity difference between these two components. Further, the microspheres may be formed into a shape other than a spherical shape, i.e., a clustered shape, for instance.

Further, a coating may be formed on the outer surface of the microspheres. The coating being selected from materials such as aluminium, zinc, copper, silver, iron, ferrite, etc., so as to improve mechanical strength of the microshpere itself and hence the resultant composite material, and preferably, to provide the composite material with further multi-functional characteristics. In this case, when manufacturing the composite material, the microspheres are cleaned and then floated and dispersed in an evaporation chamber to form the coating on the surfaces of the microspheres. By selecting a constituent of the coating having physical properties which are the same as or similar to those of the matrix, it is possible to improve material intimacy or wettability between the matrix component and the microsphere component, so as to improve the strength of the resultant composite material. Furthermore, a coating, which has one or more electromagnetic characteristics, such as electric conductivity, different from those of the matrix, may be employed to provide the composite material, as a whole, with multi-functional material characteristics. For instance, a magnetic coating and an electrically conductive coating may be formed on the microspheres for use with non-magnetic matrix and non-conductive matrix, respectively.

In manufacturing the composite material, matrix powders may be employed in place of the molten matrix. In this case, the matrix powders are supplied into a moulding die in which the filler material is already disposed. Preferably, the amount of matrix powder supplied is selected such that the volume ratio of matrix to the microspheres is between 10:1 and 10:7. Then, the matrix material and the filler material are heated to a temperature at which at least part of the matrix is fluidized so that these two elements are composited with each other.

Although, in the preferred embodiment, the filler material comprises mats and microsphere layers alternately stacked on each other, only a single microsphere layer may be formed on a single mat. A filler of this type is suitable for obtaining a thin composite material. Since the structural material may contain therein a metallic component it may also have good thermal conductivity; such materials may appropriately be applied to form a printer head, for instance.

Although the microspheres are described as being on the completed mat, the microspheres may be dispersed on and affixed to at least selected fibres used to form the mat.

Since the filler material comprises fine granular additives, having high heat-resistance, disposed on fibres having high heat-resistance, the filler material can be heated to a temperature at which it is composited with a matrix, and hence the resultant composite material has good mechanical strength.

Since the microspheres suitably have a relatively light weight, the filler material and hence the composite material has relatively low weight.

Since the fine granular additive is affixed to the mat, the additive is uniformly dispersed in the filler material and hence in the composite material, resulting in uniform characteristics for the composite material.

Since the vibration amplitude-frequency characteristic of the structural material can be changed, together with density, Young's modulus and strength, by changing associated parameters such as the amount of the fine granular additive a desired vibration amplitude-frequency characteristic without a range can be attained with ease.

## Claims

1. A composite material comprising: a matrix and a filler composited therewith, the filler being characterised in having at least one mat consisting of fibres and fine granular additive dispersed on and affixed to said at least one mat, said fibres and said additive having heat-resistance sufficient to withstand heating temperatures at which they are respectively composited with said matrix, said additive having a density different from that of said matrix.

2. A composite material according to Claim 1, further characterised in comprising a plurality of mats and a plurality of layers of fine granular additive, said mats and said layers being alternately stacked one with the other.

3. A composite material according to Claim 1 or Claim 2, further characterised in that said fine granular additive comprises hollow spheres and/or solid spheres.

4. A composite material according to any preceding claim, further characterised in that said additive has a grain diameter of less than 300 microns.

5. A composite material according to any preceding claim, further characterised in that said additive is selected from one or more of heat-resistant glasses, preferably borosilicate glass, silica glass, silica-alumina glass or silica-alumina-calcium glass, from metals and/or from ceramic materials, preferably silica, alumina or zirconia.

6. A composite material according to any preceding claim, further characterised in that said matrix is selected from one or more of metallic materials, preferably aluminium, magnesium, zinc, copper, brass or bronze; from metal alloys, preferably aluminium alloy; and/or from synthetic resins.

7. A composite material according to any preceding claim, further characterised in that said fibres are made from one or more of heat-resistant glasses having a high melting point, ceramic materials, and metallic materials.

8. A filler material adapted to be filled into a matrix and composited therewith at a high temperature to form a composite material, the filler material being characterised in comprising: at least one mat consisting of fibres; and fine granular additive dispersed on and affixed to said at least one mat; said fibres and said additives having heat-resistance sufficient to withstand heating to the temperature at which they may be respectively composited with said matrix; and said additive having a density different from that of said matrix.

9. A composite structural material having a damping function, characterised in comprising: a matrix; and a filler material which comprises at least one mat consisting of fibres, and fine granular additive dispersed on and affixed to said at least one mat; said fibres and said additive having heat-resistance sufficient to withstand heating temperatures at which they are respectively composited with said matrix to form said material; the relative proportion of additive in said material being selected so as to provide said structural material with a desired vibration amplitude-frequency characteristic.

10. A head arm for supporting a magnetic head of a disk device, characterised in that it is formed of the structural material of Claim 9.

**Revendications**

1. Matériau composite comprenant : une matrice et une charge associée, la charge étant caractérisée par le fait qu'elle comporte au moins une natte constituée de fibres et d'un additif granulé fin dispersé sur et fixé à ladite natte au moins unique, lesdites fibres et ledit additif ayant une résistance à la chaleur suffisante pour supporter des températures d'échauffement auxquelles elles sont respectivement associées à ladite matrice, ledit additif ayant une densité différente de celle de la matrice.

2. Matériau composite selon la revendication 1, caractérisé en outre par le fait qu'il comporte une pluralité de nattes et une pluralité de couches d'additif granulé fin, lesdites mattes et lesdites couches étant alternativement empilées l'une sur l'autre.

3. Matériau composite selon la revendication 1 ou la revendication 2, caractérisé en outre par le fait que ledit additif granulé fin comprend des sphères creuses et/ou des sphères pleines.

4. Matériau composite selon l'une quelconque des revendications précédentes, caractérisé en outre par le fait que ledit additif a un diamètre de grains inférieur à 300 microns.

5. Matériau composite selon l'une quelconque des revendications précédentes, caractérisé en outre par le fait que ledit additif est choisi parmi un ou plusieurs verres thermiquement résistants, de préférence un verre borosilicate, un verre de silice, un verre silico-aluminé ou un verre à base de silice, d'aluminium et de calcium, qu'il est choisi parmi des métaux et/ou des matériaux céramiques, de préférence la silice, l'alumine ou la zircone.

6. Matériau composite selon l'une quelconque des revendications précédentes, caractérisé en outre par le fait que ladite matrice est choisie parmi un ou plusieurs matériaux métalliques, de préférence l'aluminium, le magnésium, le zinc, le cuivre, le laiton ou le bronze; parmi des alliages métalliques, de préférence un alliage à base d'aluminium; et/ou parmi des résines synthétiques.

7. Matériau composite selon l'une quelconque des revendications précédentes, caractérisé en outre par le fait que lesdites fibres sont faites en un ou plusieurs verres thermiquement résistants ayant un point de fusion élevé, des matériaux céramiques et des matériaux métalliques.

8. Matériau de charge conçu pour être introduit dans une matrice et associé à celle-ci à température élevée pour former un matériau composite, ledit matériau de charge étant caractérisé par le fait qu'il comprend : au moins une natte constituée de fibres et un additif granulé fin dispersé sur et fixé à ladite matte au moins unique; lesdites fibres et lesdits additifs ayant une résistance à la chaleur suffisante pour supporter d'être chauffés à la température à laquelle ils peuvent être respectivement associés à ladite matrice; et ledit additif ayant une densité différente de celle de la matrice.

9. Matériau structurel composite ayant une fonction d'amortissement, caractérisé par le fait qu'il comprend : une matrice et un matériau de charge qui comporte au moins une matte constituée de fibres et un additif granulé fin dispersé sur et fixé à ladite matte au moins unique; lesdites fibres et ledit additif ayant une résistance à la chaleur suffisante pour supporter les températures de chauffage auxquelles ils sont respectivement associés à ladite matrice pour former ledit matériau; la proportion relative d'additif dans ledit matériau étant choisie de manière à fournir ledit matériau structurel avec une caractéristique de vibration amplitude/fréquence désirée.

10. Bras support pour supporter une tête magnétique de dispositif à disque, caractérisé par le fait qu'il est formé à l'aide du matériau structurel de la revendication 9.

**Patentansprüche**

1. Verbundmaterial, umfassend: eine Matrix und einen damit verbundenen Füllstoff, wobei der Füllstoff dadurch gekennzeichnet ist, daß er zumindest eine aus Fasern bestehende Matte und auf dieser genannten zumindest einen Matte dispergiertes und an ihr fixiertes feinkörniges Additiv aufweist, wobei die genannten Fasern und das genannte Additiv ausreichend hitzebeständig sind, um den Erwärmungstemperaturen standzuhalten, bei denen sie jeweils mit der genannten Matrix verbunden werden, wobei das genannte Additiv eine andere Dichte als die genannte Matrix aufweist.

2. Verbundmaterial nach Anspruch 1, des weiteren dadurch gekennzeichnet, daß es eine Vielzahl von Matten und eine Vielzahl von Schichten an feinkörnigem Additiv umfaßt, wobei die genannten Matten und die genannten Schichten abwechselnd aufeinandergeschichtet sind.

3. Verbundmaterial nach Anspruch 1 oder 2, des weiteren dadurch gekennzeichnet, daß das genannte feinkörnige Additiv hohle Kügelchen und/oder massive Kügelchen umfaßt.

4. Verbundmaterial nach einem der vorhergehenden Ansprüche, des weiteren dadurch gekennzeichnet, daß das genannte Additiv einen Teilchendurchmesser von weniger als 300 $\mu$m aufweist.

5. Verbundmaterial nach einem der vorhergehenden Ansprüche, des weiteren dadurch gekennzeichnet, daß das genannte Additiv aus einem oder mehreren der hitzebeständigen Gläser, vorzugsweise Borsilikatglas, Silikat(quarz)glas, Silikataluminatglas oder Silikataluminatkalziumglas, aus Metallen und/oder aus keramischen Materialien, vorzugsweise $SiO_2$, $Al_2O_3$ oder $ZrO_2$, ausgewählt ist.

6. Verbundmaterial nach einem der vorhergehenden Ansprüche, des weiteren dadurch gekennzeichnet, daß die genannte Matrix aus einem oder mehreren der metallischen Materialien, vorzugsweise Aluminium, Magnesium, Zink, Kupfer, Messing oder Bronze; aus Metallegierungen, vorzugsweise Aluminiumlegierung; und/oder aus synthetischen Harzen ausgewählt ist.

7. Verbundmaterial nach einem der vorhergehenden Ansprüche, des weiteren dadurch gekennzeichnet, daß die genannten Fasern aus einem oder mehreren der hitzebeständigen Gläser mit hohem Schmelzpunkt, keramischen Materialien und metallischen Materialien bestehen.

8. Füllmaterial, das dazu ausgebildet ist, in eine Matrix gefüllt und bei einer hohen Temperatur mit dieser verbunden zu werden, um ein Verbundmaterial zu bilden, wobei das Füllmaterial dadurch gekennzeichnet ist, daß es umfaßt: zumindest eine aus Fasern bestehende Matte; und feinkörniges Additiv, das auf der genannten zumindest einen Matte dispergiert und an ihr fixiert ist; wobei die genannten Fasern und die genannten Additive ausreichend hitzebeständig sind, um dem Erwärmen auf die Temperatur standzuhalten, bei der sie jeweils mit der genannten Matrix verbunden werden können; und wobei das genannte Additiv eine andere Dichte als die genannte Matrix aufweist.

9. Strukturverbundmaterial mit Dämpfwirkung, dadurch gekennzeichnet, daß es umfaßt: eine Matrix; und ein Füllmaterial, das zumindest eine aus Fasern bestehende Matte und auf dieser genannten zumindest einen Matte dispergiertes und an ihr fixiertes feinkörniges Additiv umfaßt; wobei die genannten Fasern und das genannte Additiv ausreichend hitzebeständig sind, um den Erwärmungstemperaturen standzuhalten, bei denen sie jeweils mit der genannten Matrix verbunden werden, um das genannte Material zu bilden; wobei der relative Anteil an Additiv im genannten Material so gewählt ist, daß dem genannten Strukturmaterial eine gewünschte Schwingungs-Amplituden-Frequenzeigenschaft verliehen wird.

10. Kopfarm zum Tragen eines Magnetkopfes eines Plattenwiedergabegeräts, dadurch gekennzeichnet, daß er aus dem Strukturmaterial nach Anspruch 9 gebildet ist.

# FIG. I

# FIG. 2

EP 0 318 228 B1

# FIG.3

FIG.4

P1

f 1

AMPLITUDE

FREQUENCY (Hz)

EP 0 318 228 B1